(19) Europäisches Patentamt / European Patent Office / Office européen des brevets

(11) **EP 4 397 626 A1**

(12) **EUROPEAN PATENT APPLICATION**

(43) Date of publication:
**10.07.2024 Bulletin 2024/28**

(21) Application number: **23150141.2**

(22) Date of filing: **03.01.2023**

(51) International Patent Classification (IPC):
**C01G 53/00** (2006.01)  **C01G 53/04** (2006.01)
**H01M 4/525** (2010.01)

(52) Cooperative Patent Classification (CPC):
**C01G 53/006; C01G 53/04; C01G 53/42;
H01M 4/366; H01M 4/505; H01M 4/525;
H01M 10/0525;** C01P 2002/54; C01P 2004/51;
C01P 2004/61; C01P 2004/84; C01P 2006/12;
C01P 2006/14; H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Umicore
1000 Brussels (BE)**
• **Umicore Finland OY
67900 Kokkola (FI)**

(72) Inventors:
• **ZHU, Liang
1000 Brussels (BE)**
• **HIETANIEMI, Marianna
67900 Kokkola (FI)**
• **BYSTRÖM, Martina
67900 Kokkola (FI)**
• **NIITTYKOSKI, Janne
67900 Kokkola (FI)**

(74) Representative: **Umicore RDI Patent Department
Watertorenstraat 33
2250 Olen (BE)**

(54) **POWDEROUS MATERIAL OF HYDROXIDE OR OXYHYDROXIDE OF ONE OR MORE METAL ELEMENTS FOR PREPARING POSITIVE ELECTRODE ACTIVE MATERIAL FOR BATTERIES**

(57) The present invention relates to a powderous material of hydroxide or oxyhydroxide of one or more metal elements for preparing positive electrode active material for batteries, wherein the one or more metal elements include at least one of Ni, Co and Mn, wherein the powderous material comprises particles having a core and a shell surrounding the core, wherein the core has a total area (Ac) and the shell has a total area (As) on a cross-section plane of the particle, wherein the shell has a void area percentage of at least 20% and at most 99% based on the total area of the shell (As), as determined based on cross-section SEM image analysis.

*Fig. 1*

EP 4 397 626 A1

**Description**

**TECHNICAL FIELD**

The present invention relates to metal hydroxides that can be used as precursors to cathode active materials for secondary batteries. Particularly, however not exclusively, the present invention concerns powderous material comprising hydroxide or oxyhydroxide of at least one or more metal elements, a method for manufacturing powderous hydroxide or oxyhydroxide material, and a method for manufacturing a positive electrode active material for secondary batteries.

**BACKGROUND**

Lithium-ion secondary batteries typically include a negative electrode (anode), an electrolyte, and a positive electrode (cathode) that contains a lithium-transition metal oxide as an active material capable of insertion and desorption of lithium. Lithium-transition metal oxides are generally manufactured from transition-metal hydroxides, oxides or oxyhydroxide manufactured, generally referred as precursors, in turn in co-precipitation processes that disclose admixing of a metal salt solution and an alkali solution with the existence of a complexing agent. A manufacturing process of cathode materials generally involves mixing a precursor material with a lithium source, sintering and when necessary also milling.

As cathode materials are a critical component of rechargeable batteries and have a significant impact on the performance of the overall battery, in recent years there has been a lot of research and development in this area, including their precursors. Several trends for the development of cathode materials include, among others, improved capacity retention, higher energy densities, improved stability and cycling performance, and lower cost. One approach to improving the properties of cathode materials is to optimize the microstructure of the cathode material, which is directly reflected from the microstructure of its precursor. And one approach to lower the cost is to providing these materials (cathode material and/or its precursor) by a more efficient process.

In view of above, there is a constant need for further improvements in the precursors.

**SUMMARY OF THE INVENTION**

The present invention aims to provide powderous material comprising of hydroxide or oxyhydroxide of one or more metal elements as a precursor for facilitating the manufacturing process of the cathode active material.

Viewed from a first aspect, the invention provides a powderous material of hydroxide or oxyhydroxide of one or more metal elements for preparing positive electrode active material for batteries, wherein the one or more metal elements include at least one of Ni, Co and Mn, wherein the powderous material comprises particles having a core and a shell surrounding the core, wherein the core has a total area $A_c$ and the shell has a total area $A_s$ on a cross-section plane of the particle, wherein the shell has a void area percentage of at least 20% and at most 99% based on the total area of the shell $A_s$, as determined based on cross-section SEM image analysis.

Such material according to the present invention is also simply referred herein as a precursor, for the sake of easy explanation. The precursor according to the present invention have a composition that can be presented by a general formula: $M-O_x(OH)_{2-x}$, wherein $0 \leq x \leq 2$, and M represents element(s) and includes at least one of the Ni, Co and Mn, and possibly at least one other element like an impurity.

The shell of a particle is to be understood as a outer covering surrounds the particle, and the shell is delimited by an outer and an inner interfaces, the inner interface being in contact with the core.

Void area percentage can be used to indicate the porosity of a material. Thus, the disclosed ranges of the void area percentage of the shell of the articles indicates that the precursor according to the present invention has a porous shell zone. It is found that the porous shell facilitates the manufacturing process of cathode materials. Particularly, the powderous material, i.e. the precursor, according to the invention having the porous shell zone contributes to less agglomeration of the particles and/or to avoid over-sintering during sintering process. In addition, the more porous shell provides the less contact area between particles, which makes milling process a lot easier; for example, a lower energy is needed to mill the particles to a desired median particle size.

In a second aspect, the invention concerns a method of manufacturing a positive electrode active material, comprising the steps of:

- Mixing a powderous material of a hydroxide or oxyhydroxide of one or more metal elements according to the first aspect of the invention, a lithium source, and a optionally dopant source to obtain a mixture,
- Heating the mixture in oxidizing atmosphere at a temperature between 650°C to 1000°C to obtain the positive electrode active material, and optionally

- the method further comprising a heat treatment step before the mixing, wherein the powderous material is heated at a temperature of 105 °C to 750 °C.

Various embodiments according to the present invention are disclosed in the claims as well as in the description. The embodiments and examples recited in the claims and in the description are mutually freely combinable unless otherwise explicitly stated. Throughout the entire description, if any numerical ranges are provided, the ranges include also the endpoint values unless otherwise explicitly stated.

**BRIEF DESCRIPTION OF THE FIGURES**

By means of further guidance, figures are included to better appreciate the teaching of the present invention, wherein:

Fig. 1 shows a scanning electron microscope (SEM) image of particles obtained from Example 1;
Figs. 2a, 2b and 2c show a SEM-image based void area analysis of hydroxide particles obtained in Example 1;
Fig. 3 shows mean average sizes D50 of the positive electrode active materials of Example C and of the positive electrode active materials of Comparative example C after 30s of low energy milling; and
Fig. 4 shows D50 of positive cathode active materials of Example C and of the positive electrode active materials of Comparative example C calcinated at 820 °C after bead milling in water for 0, 3, 6 and 13 hours.

**DETAILED DESCRIPTION OF THE INVENTION**

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

The term "a positive electrode active material" (also known as cathode active material) as used herein and in the claims is defined as a material which is electrochemically active in a positive electrode or cathode. By active material, it must be understood to be a material capable to capture and release Li ions when subjected to a voltage change over a predetermined period of time.

The term "a positive electrode" as used herein is defined as a material comprising a positive electrode active material also in addition to other components which are not electrochemically active, in particular conductivity agents such as carbon black or binders such as PVDF.

The term "void area" as used herein refers to an empty area that is not occupied by a substance. Synonyms include empty area, hollow area and the like.

The term "void area percentange" is a measure of the amount of empty or unoccupied space in a given area, with higher values indicating a higher proportion of void space. It can also be understood as percentage of an area of the pores or the like.

The term "porosity" as used herein refers to a measure of the void (i.e. "empty") spaces in a material, and is a fraction of the volume of voids over the total volume.

The term "total volume" as used herein refers to the volume of the solid matrix of the material as well as the volume of the voids or pores within the material.

Viewed from a first aspect, the invention can provide a powderous material of hydroxide or oxyhydroxide of one or more metal elements for preparing positive electrode active material for batteries, wherein the one or more metal elements include at least one of Ni, Co and Mn, wherein the powderous material comprises particles havinge a core and a shell surrounding the core, wherein the core has a total area ($A_c$) and the shell has a total area ($A_s$) on a cross-section plane of the particle, wherein the shell has a void area percentage of at least 20% and at most 99% based on the total area of the shell ($A_s$), as determined based on cross-section SEM image analysis. As appreciated by the skilled person the void areas and void area percentages of the core and the shell can be measured based on SEM image using a suitable software, for example ImageJ software (ImageJ 1.52a, National Institutes of Health, USA).

Such material according to the present invention is also simply referred herein as a precursor, for the sake of easy explanation. The precursor according to the present invention have a composition that can be presented by a general formula: $M-O_x(OH)_{2-x}$ , wherein $0 \le x \le 2$, and M represents element(s) and includes at least one of the Ni, Co and Mn, and possibly at least one other element like an impurity.

As mentioned, void area percentage can be used to indicate the porosity of a material. The powderous material, i.e. the precursor, according to the invention having the porous shell zone contributes to less agglomeration of the particles during sintering and/or to avoid over-sintering during sintering process, and in addition to make milling process a lot easier. In some embodiment, the void area percentage of the shell is at least 25%, preferably at least 30%, more preferably at least 50%.

In some embodiments, the void area percentage of the shell is at most 80%, or at most 70%, or at most 60%.

In some embodiments, the core of particle has a void area percentage of at most 10%, more preferably at most 5%, even more preferably at most 1%, as determined based on cross-section SEM image analysis. The disclosed ranges of the void area percentage of the core indicates a less porous core zone, i.e. a dense core zone. A precursor having a denser core zone facilitate the manufacturing process of cathode material in the sense of throughput, as, for example, more precursor (or blend) can be loaded into a tray for one process step. Further, a denser cathode material, which has a direct link to a precursor having a denser core zone, contributes to a higher energy density since with the same electrode size, the loading of active material is higher.

In some embodiments, the particles have an average radius of the particle R1, an average radius of the core R2 and a ratio R between the average radius of the particle and average radius of the core R1/R2, and wherein $R \ge 1.00$, preferably $R \ge 1.50$, and more preferably $R \ge 2.00$ wherein R1 and R2 are both obtained by taking the average of radius measurements of a representative number of particles and determined by SEM image analysis.

In some embodiments, the ratio R is $R \le 10$ or $R \le 5$ or $R \le 3$. The bigger the ratio R is, the larger the porous shell zone in a precursor is. The smaller the ratio R is, the larger the dense core zone in a precursor is. The disclosed ranges of R indicate an optimized balance between the volumes of the shell zone and the core zone occupied in a precursor, each of which brings advantages in different aspect as described above. The same idea may be presented as a percentage ratio between (R1-R2) and R1. Thus, in some embodiments, a percentage ratio between (R1-R2) and R1 is at most 90.0%, preferably at most 80.0%, more preferably at most 60%.

In some embodiments, the powderous material has a BET specific surface area of at least 7.0 m²/g, preferably of at least 15.0 m²/g, and more preferably of at least 20.0 m²/g. As appreciated by the skilled person the specific surface area can be measured, for example, with the Brunauer-Emmett-Teller (BET) method by using, for example, a Quantachrome Monosorb. The disclosed ranges of the BET make the precursor according to the invention especially suitable for manufacturing the monolithic cathode material, as it allows to get fully separated particles without mechanical damage and no fines formation after milling.

In the context of the present invention a particle is considered to be single-crystalline if it consists of only one grain or at most five grains, preferably at most three grains, as observed by Scanning Electron Microscope (SEM) or Transmission Electron Microscope (TEM), preferably by observing grain boundaries of the particle. A grain boundary is defined as the interface between two grains in a particle, preferably wherein the atomic planes of the two grains are aligned to different orientations and meet as a crystalline discontinuity.

In certain preferred embodiments of the invention and in the context of the present invention the single-crystalline particle as defined herein is a monolithic particle. As appreciated by the skilled person in these certain preferred embodiments all embodiments related to the single-crystalline particle equally apply to the monolithic particle as defined in the present invention.

In some embodiments, the particles have a median particle size D50, as determined by laser diffraction, which is at least 2.0 μm and at most 10 μm, preferably at least 2.5 μm and at most 8 μm, and more preferably at least 3 μm and at most 5 μm. As appreciated by the skilled person the particle size distribution can be analysed by using a Malvern Mastersizer 3000 with a Hydro MV wet dispersion unit after dispersing particles of a sample in an aqueous medium. The disclosed ranges of median particle size make the precursor according to the invention especially suitable for manufacturing the monolithic cathode material, as the smaller the particle size of the precursor is, the easier the monolithic cathode material can be obtained.

In some embodiments, the powderous material comprises

- Ni in a content x, wherein $x \ge 5.0$ mol%,
- Mn in a content z, wherein $0 \le y \le 85.0$ mol%,
- Co in a content y, wherein $0 \le z \le 30.0$ mol%,
- one or more additional elements in a content r, wherein the additional elements are elements from the list of Al, B, Ba, Ca, Ce, Cr, Fe, La, Mg, Mo, Nb, Si, Sr, Ti, Y, V, W, Zn, and Zr, wherein $0 \le r \le 5.0$ mol%,

wherein x, y, z, and r are contents expressed as mol% relative to the total molar content of the powderous material, and wherein x + y + z + r = 100.0 mol%. The values x,y,z,r are measured by Inductively Coupled Plasma (ICP) method. It can be understood that the expression $\geq 0$ includes the absence of an element. In some embodiments, wherein $x \geq 60$ mol% or $x \geq 70$ mol% or $x \geq 80$ mol% or $x \geq 90$ mol%; and/or wherein $y \geq 20$ mol% and/or $z \leq 25$ mol%.

In some embodiments, the powderous material has a span value (D90-D10)/D50 being at most 1.00, preferably at most 0.80, more preferably at most 0.50, even more preferably at most 0.30.

In some embodiments, the particles comprised in the powderous material are secondary particles comprising a plurality of primary particles.

The manufacturing method for the precursor of the invention may, for example, generally include:

- providing a starting solution comprising an aqueous slurry of seed particles in a reactor vessel,
- supplying a flow of a metal salt solution comprising the one or more metal elements to the reactor vessel for a time period T1-T2,
- during the time period T1-T2, admixing starting solution, the metal salt solution and an aqueous solution comprising one or more alkali hydroxides, thereby precipitating the hydroxide of the one or more metal elements and forming an aqueous slurry comprising the hydroxide of the one or more metal elements,

wherein during the time period T1 - T2, maintaining in the reaction vessel:

- a pH value in a range of 10.0 to 11.0, preferably 10.2 to 10.7, wherein the pH value is the pH value as measured on a sample of the aqueous slurry at 20°C; and
- a concentration of $NH_3$ of superior or equal to 1.0 g/l and preferably inferior or equal to 15.0 g/l, preferably superior or equal to 1.5 g/l and inferior or equal to 5 g/l,

wherein after the end of the time period T2 the aqueous slurry in the reactor vessel is further processed by separating a solid fraction from a liquid fraction and drying the solid fraction to obtain the powderous material.

During the course of manufacturing process, the precipitated hydroxide may be partially oxidized, depending on the atmosphere of the manufacturing process. Thus, the aqueous slurry may contain oxyhydroxide. Also during drying, the hydroxide or oxyhydroxide particles from the aqueous slurry may be further partially oxidized. It is to be noted that an atmospheric condition is not essential to achieve the claimed invention.

As appreciated by the skilled person the pH value can be measured by using a pH meter, for example 780 Metrohm meter. As appreciated by the skilled person the $NH_{3(aq)}$ concentration can be measured by using a commercially available titrator, for example Metrhom 848 Titrino Plus.

In a second aspect the invention concerns a method of manufacturing a positive electrode active material, comprising the steps of:

- Mixing a powderous material of a hydroxide or oxyhydroxide of one or more metal elements according to the first aspect of the invention, a lithium source, and a optionally dopant source to obtain a mixture,
- Heating the mixture in oxidizing atmosphere at a temperature between 650°C to 1000°C to obtain the positive electrode active material, and optionally
- the method further comprising a heat treatment step before the mixing, wherein the powderous material is heated at a temperature of 105 °C to 750 °C.

In a third aspect the present invention concerns a use of the hydroxide or oxyhydroxide powderous material according to the first aspect of the invention in a positive electrode active material.

In a fourth aspect the present invention concerns a use of the positive electrode active material manufactured according to the second aspect of the invention in a secondary battery.

## EXAMPLES

The present invention is further illustrated with reference to some examples and comparative examples. In all of the examples, a pH value refers to a value measured at a temperature of 20 °C. Further, in all of the processes of the examples a reducing atmosphere was ensured by applying a flow of nitrogen gas into the reactor vessel during the precipitation reaction except as otherwise indicated.

Measurement methods used in the examples

**A) pH analysis**

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

**B) $NH_{3(aq)}$ concentration analysis**

The $NH_{3(aq)}$ concentration was measured from a reactor sample by end point titration using an instrument of Metrhom 848 Titrino Plus. One milliliter of sample solution was added to a titration vessel. 30-40 ml of deionized water and 1 ml of 1M NaOH were added. Sample was titrated to the end point by 0.1M HCl. The term "concentration of $NH_{3(aq)}$" or the like as used herein means the concentration of ammonia in an aqueous solution.

**C) Solid content analysis**

For the determination of the solid content of precipitated hydroxide in the aqueous slurry, a sample taken from the aqueous slurry (the "reaction mixture" in the examples) was mixed well and 10-30 ml of the mixed sample was pipetted onto the filter paper that was further filtered onto a washed and weighed 0,8 um membrane. The filtered membrane was rinsed with DI water followed by drying and measuring the weight of the dried membrane from which the solid content, expressed as weight of the dried hydroxide per liter of the aqeous slurry in g/l was calculated.

**D) Surface area analysis**

The specific surface area (SA) of the example samples was measured with the Brunauer-Emmett-Teller (BET) method by using a Quantachrome Monosorb. A powder sample was put int the sample tube and heated at 90 °C under a nitrogen ($N_2$) gas for 2 hours prior to the measurement in order to remove adsorbed species. The sample was then de-gassed at room temperature for five minutes. The instrument performed the nitrogen adsorption test at 77 K. By obtaining the nitrogen isothermal absorption/desorption curve, the total specific surface area of the sample in $m^2/g$ was derived.

**E) Particle size distribution (PSD) analysis**

PSD was measured using a Malvern Mastersizer 3000 with a Hydro MV wet dispersion unit after dispersing particles of a sample in an aqueous medium. To improve the dispersion of the metal hydroxide powder, sufficient ultrasonic irradiation and stirring was applied, and an appropriate surfactant was introduced. Percentile values D10, D50, and D90 are the value of the particle diameter at 10%, 50% and 90%, respectively, in the cumulative distribution. A span value of the hydroxide is a value of (D90-D10)/D50.

**F) Metal content analysis**

The metal content of the hydroxides were measured by the Inductively Coupled Plasma - Optical Emission Spectrometry (ICP-OES) method using an Agilent ICP 720-OES instrument. 1 gram of a powder sample of each example was dissolved into 50 mL of high purity hydrochloric acid in an Erlenmeyer flask. The flask was covered by a watch glass and heated on a hot plate at 380 °C until complete dissolution of the sample. After being cooled to room temperature, the solution and the rinsing water of Erlenmeyer flask were transferred to a 250 mL volumetric flask. Afterwards, the volumetric flask was filled with deionized (DI) water up to the 250 mL mark, followed by complete homogenization. An appropriate amount of the solution was taken out by a pipette and transferred into a 250 mL volumetric flask for the second dilution, where the volumetric flask was filled with the internal standard and 10% hydrochloric acid up to the 250 mL mark and then homogenized. Finally, this solution was used for the ICP-OES measurement. The contents of metals, such as Ni, Mn, and Co, are expressed as mol% of the total metal content in the measured hydroxide.

**G) Void area analysis**

The void area of shell and core of the particles are calculated by using ImageJ software (ImageJ 1.52a, National Institutes of Health, USA) according to the following steps:

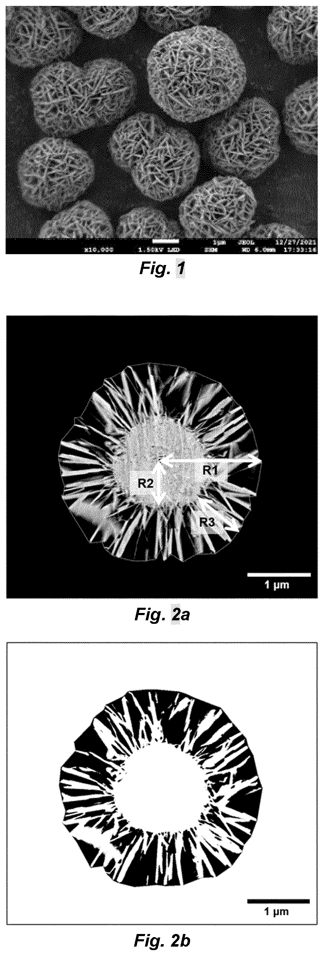

Step 1) Open the file containing SEM image of positive electrode active material with 20,000 times magnification and sufficient contrast. Figure 2a shows the SEM image of EX1.

Step 2) Set scale according to the SEM magnification.

Step 3) Tick Area box in the Select measurement.

Step 4) Select polygon tool and select the outer edge of particle shell then click Analyze - Measure to get the area of a whole particle (A1). Equivalent radius of particle (R1) is obtained by assuming the particle in the spherical shape following $R1 = \sqrt{\frac{A1}{\pi}}$ .

Step 5) In the selected image, select Edit-Clear Outside to remove the outer part of particle.

Step 6) Select Process - Binary - Make Binary to convert the cropped image to be a binary black and white image.

Step 7) Select polygon tool and select the inner edge of particle shell (or the edge of core) then click Analyze - Measure to get the area of core (A2). Equivalent radius of core (R2) is obtained by assuming the particle in the spherical shape following $R2 = \sqrt{\frac{A2}{\pi}}$ .

Step 8) Save the image as tiff.

Step 9) select Edit - Clear to remove the core part thereby showing only the shell part of particle as a ring. Figure 2b shows the processed image of EX1 from this step.

Step 10) Select analyze - Analyze particle to obtain the area of black regions which are the pores of shell. Total area is total pores area of shell (A3).

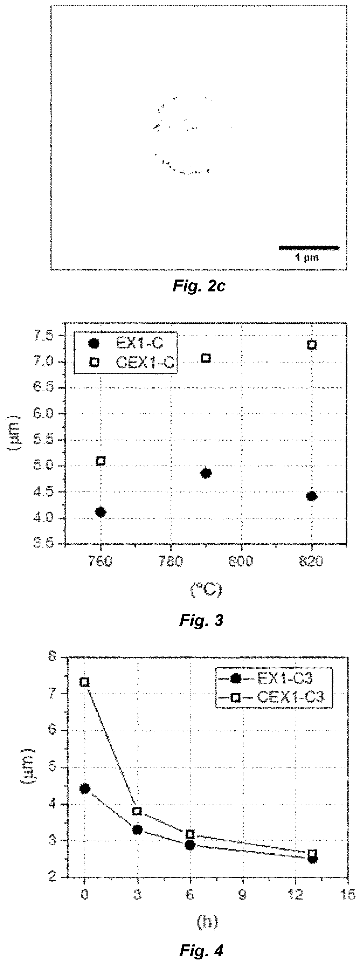

Step 11) Open the saved .tiff image in Step 8) then select Edit-Clear Outside to remove the outer part of core. Figure 2c shows the processed image of EX1 from this step.

Step 12) Select analyze - Analyze particle to obtain the area of black regions which are the pores of core. Total area is total pores area of core (A4).

Shell and core void areas are calculated according to: $Shell\ porosity = \frac{A3}{(A1-A2)} \times 100\%$ and $Core\ porosity = \frac{A4}{A2} \times 100\%$ .

## Example 1

An aqueous slurry of metal hydroxide was prepared according to the following process:

A starting solution was prepared by placing 0.75 L of DI water, 11 mL of 220 g/L $NH_3$(aq), and 1000 mL of 150 g/L aqueous slurry comprising seed particles of $Ni_{0.94}Mn_{0.03}Co_{0.03}(OH)_2$ having D50 of 1.2 $\mu$m in a 3.6 L reactor vessel and adjusting the temperature in the reactor vessel to 85 °C and kept at this temperature throughout the process.

Next, a precipitation reaction was performed by adding 120 g/L metal sulfate solution comprising Ni, Mn, and Co (in a stoichiometric molar ratio, Ni:Mn:Co of 94:3:3), 55 g/L $NH_3$(aq), and 220 g/L NaOH solution, while mixing with a power density of around 33 kW/m$^3$. A feed rate of the metal sulfate solution was increased steadily from 182 mL/h to 900 mL/h through the precipitation. During the reaction a feed rate of the NaOH solution was adjusted so that a pH value of the reaction mixture in the reactor vessel was kept steady at 10.5 $\pm$ 0.2 and a feed rate of the $NH_3$(aq) was adjusted so that a $NH_3$(aq) concentration in the reaction mixture was kept steady at 1.5 g/l in the beginning and rising to 5 g/l in the end. A reactor sample of the reaction mixture was taken every two hours and the D50 was measured from it. The reaction was stopped when the D50 of the reactor sample reached approximately the target value of 3.5 $\mu$m, a duration of the process was 16 h. A part of a liquid fraction of the reaction mixture was pumped out from the reactor during the process by using an external concentrator and a solid content of the reaction mixture, which is an aqueous slurry comprising hydroxide particles, in the reactor vessel was increased constantly was around 400 g/L in the end of the process.

Further, the slurry was filtered and washed with 220 g/L NaOH solution and 60°C DI water. The filter cake was dried in the oven with 120 °C for 12 hours to obtain a dried product, EX1.

Some of the characteristics of the dried, powderous hydroxide EX1 obtained in example 1 are illustrated in Table 1.

A comparative dried hydroxide product, CEX1, to be used in the Example C are also illustrated in Table 1.

Table 1

| | Metal content [(Ni(mol %)/ Mn(mol %)/ Co (mol% )] | D50 (μm) | span [(D90-D10)/ D50] | BET / Surface area (m²/g) | Shell void area (%) | Core void area (%) | R = R1/R2 | (R1-R2)/R1 (%) |
|---|---|---|---|---|---|---|---|---|
| EX1 | 94/3/3 | 3.50 | 0.26 | 23.21 | 57.66 | 0.17 | 2.21 | 54.8 |
| CEX1 | 94/3/3 | 3.70 | 0.36 | 6.12 | 8.81 | 0.42 | 2.59 | 61.4 |

Manufacture of the cathode active material

Example C

A positive electrode active material (EX1-C1) was prepared according to below steps:

Step 1) Mixing: EX1 was mixed with $ZrO_2$ and LiOH in an industrial blender to obtain a mixture having 0.125 mol% Zr and lithium to metal (Ni, Mn, and Co) ratio of 1.00.
Step 2) Heating: Mixture from Step 1) was heated under oxygen flow at a first temperature of 760°C for 10 hours and then at a second temperature of 710°C for 10 hours.
Step 3) Post-treatment: The heated powder from Step 2) was grinded by a grinder for 30s and then sieved to obtain a positive electrode active material named as EX1-C1.

Further positive electrode active materials (EX1-C2 and EX1-C3) were prepared according to the same method as EX1-C1, except that the first temperature in the Step 2) was 790°C for EX1-C2 and 820°C for EX1-C3, respectively.

Comparative example C

A comparative positive electrode active material (CEX1-C1) was prepared according to below steps:

Step 1) Mixing: CEX1 was mixed with ZrO2 and LiOH in an industrial blender to obtain a mixture having 0.125 mol% Zr and lithium to metal (Ni, Mn, and Co) ratio of 1.00.

Step 2) Heating: Mixture from Step 1) was heated under oxygen flow at a first temperature of 760°C for 10 hours and then at a second temperature of 710°C for 10 hours.

Step 3) Post-treatment: The heated powder from Step 2) was grinded by a grinder for 30s and then sieved to obtain a comparative positive electrode active material named as CEX1-C1.

Further comparative positive electrode active materials (CEX1-C2 and CEX1-C3) were prepared according to the same method as CEX1-C1, except that the first temperature in the Step 2) was 790°C for CEX1-C2 and 820°C for CEX1-C3, respectively.
Fig. 3 shows mean average sizes D50 of the positive electrode active materials of Example C and of the positive electrode active materials of Comparative example C after 30s of low energy milling. Low energy milling is a common practice to break the hardened powder after heating for further treatment. It is observed that the positive electrode active materials obtained from EX1 achieve smaller D50 in comparison with the positive electrode active materials of CEX1 after the milling.
Fig. 4 shows D50 of EX1-C3 and CEX1-C3 after bead milling in water for 0, 3, 6 and 13 hours. Before the bead milling, the positive electrode active materials were continuously low energy milled for 30 minutes. The bead milling is done to obtain positive electrode active material comprising single-crystalline particles. Consistent with the observation from low energy milling in Fig. 4, EX1-C3 achieves smaller D50 in comparison with CEX1-C3 with the same bead milling period. It can be concluded that the positive electrode active material obtained from CEX1 requires higher energy to achieve the same D50 as the positive electrode active material obtained from EX1. The lower energy requirement for EX1 is originated from the structure of the metal hydroxide according to this invention. With the porous shell structure, indicated by the shell void area percentage of at least 20%, the contact area between particles is minimized and agglomeration is avoided.

EP 4 397 626 A1

**Claims**

1. A powderous material of hydroxide or oxyhydroxide of one or more metal elements for preparing positive electrode active material for batteries, wherein the one or more metal elements include at least one of Ni, Co and Mn, wherein the powderous material comprises particles having a core and a shell surrounding the core, wherein the core has a total area ($A_c$) and the shell has a total area ($A_s$) on a cross-section plane of the particle, wherein the shell has a void area percentage of at least 20% and at most 99% based on the total area of the shell ($A_s$), as determined based on cross-section SEM image analysis.

2. The powderous material according to claim 1, wherein the core has a void area percentage of at most 10%, more preferably at most 5% based the total area of the core ($A_c$), even more preferably at most 1%, as determined based on cross-section SEM image analysis.

3. The powderous material according to any of the previous claims, wherein the void area percentage of the shell is at least 25%, preferably at least 30%, more preferably at least 50%.

4. The powderous material according to any of the previous claims, wherein the particles have an average radius of the particle (R1), an average radius of the core (R2) and a ratio (R) between the average radius of the particle and average radius of the core (R1 / R2), and wherein $R \geq 1.00$, preferably $R \geq 1.50$, and more preferably $R \geq 2.00$, wherein R1 and R2 are both obtained by taking the average of radius measurements of a representative number of particles by SEM image analysis.

5. The powderous material according to claim 4, wherein $R \leq 10$ or $R \leq 5$ or $R \leq 3$.

6. The powderous material according to any of the previous claims, wherein the powderous material has a BET specific surface area of at least 7.0 $m^2/g$, preferably of at least 15.0 $m^2/g$, and more preferably of at least 20.0 $m^2/g$.

7. The powderous material according to any of the previous claims, wherein the particles have a median particle size D50, as determined by laser diffraction, which is at least 2.0 $\mu$m and at most 10 $\mu$m, preferably at least 2.5 $\mu$m and at most 8 $\mu$m, and more preferably at least 3 $\mu$m and at most 5 $\mu$m.

8. The powderous material according to any of the previous claims, wherein a percentage ratio between (R1-R2) and R1 is at most 90.0%, preferably at most 80.0%, more preferably at most 60%.

9. The powderous material according to any of the previous claims, comprising:

   - Ni in a content x, wherein $x \geq 5.0$ mol%,
   - Mn in a content z, wherein $0 \leq y \leq 85.0$ mol%,
   - Co in a content y, wherein $0 \leq z \leq 30.0$ mol%,
   - one or more additional elements in a content r, wherein the additional elements are elements from the list of Al, B, Ba, Ca, Ce, Cr, Fe, La, Mg, Mo, Nb, Si, Sr, Ti, Y, V, W, Zn, and Zr, wherein $0 \leq r \leq 5.0$ mol%,

   wherein x, y, z, and r are contents expressed as mol% relative to the total molar content of the powderous material and wherein $x + y + z + r = 100.0$ mol%.

10. The powderous material according to claim 9, wherein $x \geq 60$ mol% or $x \geq 70$ mol% or $x \geq 80$ mol% or $x \geq 90$ mol%; and/or wherein $y \geq 20$ mol% and/or $z \leq 25$ mol%.

11. The powderous material according to any of the previous claims, having a span value (D90-D10)/D50 being at most 1.00, preferably at most 0.80, more preferably at most 0.50, even more preferably at most 0.30.

12. The powderous material according to any of the previous claims, wherein the particles are secondary particles comprising a plurality of primary particles.

13. Method of manufacturing a positive electrode active material, comprising the steps of:

   - Mixing a powderous material of hydroxide or oxyhydroxide of one or more metal elements according to any of claim 1 to 12, a lithium source, and a optionally dopant source to obtain a mixture,

- Heating the mixture in oxidizing atmosphere at a temperature between 650°C to 1000°C to obtain the positive electrode active material, and optionally
- the method further comprising a heat treatment step before the mixing, wherein the powderous material is heated at a temperature of 105 °C to 750 °C.

*Fig. 1*

*Fig. 2a*

*Fig. 2b*

*Fig. 2c*

*Fig. 3*

*Fig. 4*

Europäisches
Patentamt

European
Patent Office

Office européen
des brevets

# EUROPEAN SEARCH REPORT

**Application Number**

EP 23 15 0141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/280067 A1 (YOU JUNFEI [CN] ET AL) 3 September 2020 (2020-09-03) | 1,3-13 | INV. C01G53/00 C01G53/04 H01M4/525 |
| A | * lines 70-71,74-75; claims; tables * ----- | 2 | |
| X | US 11 201 328 B2 (SAMSUNG SDI CO LTD [KR]) 14 December 2021 (2021-12-14) * examples; tables * ----- | 1-13 | |
| A | US 11 355 745 B2 (SAMSUNG SDI CO LTD [KR]) 7 June 2022 (2022-06-07) * tables * ----- | 1-13 | |

**TECHNICAL FIELDS SEARCHED (IPC)**

C01G
H01M

The present search report has been drawn up for all claims

| Place of search | Date of completion of the search | Examiner |
|---|---|---|
| Munich | 4 July 2023 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 0141

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2023

| Patent document cited in search report | | Publication date | Patent family member(s) | | Publication date |
|---|---|---|---|---|---|
| US 2020280067 | A1 | 03-09-2020 | CN | 109574090 A | 05-04-2019 |
| | | | EP | 3675254 A1 | 01-07-2020 |
| | | | JP | 2020535104 A | 03-12-2020 |
| | | | KR | 20200049844 A | 08-05-2020 |
| | | | US | 2020280067 A1 | 03-09-2020 |
| | | | WO | 2019062808 A1 | 04-04-2019 |
| US 11201328 | B2 | 14-12-2021 | CN | 110226251 A | 10-09-2019 |
| | | | EP | 3550643 A1 | 09-10-2019 |
| | | | KR | 20180063857 A | 12-06-2018 |
| | | | US | 2019379044 A1 | 12-12-2019 |
| | | | WO | 2018101807 A1 | 07-06-2018 |
| US 11355745 | B2 | 07-06-2022 | CN | 110168785 A | 23-08-2019 |
| | | | EP | 3550640 A1 | 09-10-2019 |
| | | | JP | 6878586 B2 | 26-05-2021 |
| | | | JP | 2020513657 A | 14-05-2020 |
| | | | KR | 20180063860 A | 12-06-2018 |
| | | | US | 2019386298 A1 | 19-12-2019 |
| | | | WO | 2018101809 A1 | 07-06-2018 |

EPO FORM P0459

For more details about this annex : see Official Journal of the European Patent Office, No. 12/82